# EUROPEAN PATENT APPLICATION

(11) **EP 3 118 791 A1**
(43) Date of publication of application: **18.01.2017**
(21) Application number: 16179268.4
(22) Date of filing: 13.07.2016
(51) Int. Cl.: G06Q 20/04, G06Q 20/20

(54) **CHECK-OUT SYSTEM, PAYMENT APPARATUS, AND CONTROL PROGRAM THEREOF**

(30) Priority: 17.07.2015 JP 2015143392
(71) Applicant: Toshiba TEC Kabushiki Kaisha, Tokyo 141-0032 (JP)
(72) Inventor: NIMIYA, Shigeki, Shinagawa-ku, Tokyo 141-8562 (JP); ARAI, Yasuhiro, Shinagawa-ku, Tokyo 141-8562 (JP)
(74) Representative: Takeuchi, Maya

(57) **Abstract**

A check-out system according to an embodiment includes a registration device and a payment device in communication with the registration device. The registration device generates payment information including a payment amount required for a transaction. The registration device can acquire a user code. The payment information is sent to the payment device. If the user code is acquired, the user code is sent to the payment device. The payment device performs a payment process based on the payment information. The payment device can also acquire the user code. The payment device generates receipt information. If the user code is not received from the registration device or acquired by the payment device, the payment device prints a receipt sheet. If the user code is received from the registration device or acquired by the payment device, the payment device transmits the user code and the receipt information to a management device.

## Description

### FIELD

Embodiments described herein relate generally to a check-out system, a payment apparatus, and a control program thereof.

### BACKGROUND

Generally, a semi-self-service check-out system is known. In the check-out system of this type, purchase registration and payment are respectively performed in a merchandise registration apparatus and a payment apparatus. Such a system may be provided, for example, in a supermarket. Generally, a salesperson operates the merchandise registration apparatus, and a shopper operates the payment apparatus.

In such as system, the operation by the shopper in the payment apparatus is limited to designation of a payment method, input of payment information, and the like. Typically, the designation of a payment method is a selection of cash, credit card, or electronic money that the shopper will use to perform payment. The input of payment information refers to, for example, inserting cash into a cash input slot in the case of cash payment, or inserting a credit card into a card insertion port in the case of credit payment, and transmitting electronic money information in the case of electronic money payment.

Generally, the salesperson performs other various operations in the merchandise registration apparatus. When it is possible to select a between using a traditional paper receipt, or an electronic receipt, an operation for selecting the electronic receipt is received in the merchandise registration apparatus.

However, for example, a shopper may forget to notify a sales person that the shopper prefers the electronic receipt at the time of purchase registration. Thus, even when the shopper prefers the electronic receipt, a traditional paper receipt may be issued.

To solve such problems, there is provided a payment device for use in a check-out system comprising:
a storage unit;
a communication interface; and
a processor, wherein the processor is configured to control the storage unit and communication interface to:
   receive, from a registration device in the check-out system, payment information for a transaction,
   receive, from the registration device, a user code corresponding to a user who uses an electronic receipt service,
   perform a payment process based on the payment information sent by the registration device and input from a customer,
   acquire the user code,
   generate receipt information including the merchandise purchased in the transaction and information regarding the payment process,
   if the user code is not received from the registration device or not acquired by the payment device, print a receipt sheet based on the receipt information, and
   if the user code is received from the registration device or acquired by the payment device, transmit the user code and the receipt information to a management device which stores the receipt information in association with the user code.

Preferably, the payment device further comprises a display unit configured to display a screen that instructs the user to input the user code.

Preferably still, the display unit is configured to not display the screen that instructs the user to input the user code when the user code has been received from the registration device or acquired by the payment device.

Preferably yet, the display unit is configured to display a screen that informs the user that the receipt sheet will not be printed when the user code has been received from the registration device or acquired by the payment device.

Suitably, the screen is displayed while a registration process of acquiring one or more merchandise codes is ongoing.

Suitably still, the receipt sheet is not printed if the user code is received from the registration device or acquired by the payment device.

Suitably yet, the payment device further comprises a display unit configured to display a screen that instructs the user to contact an electronic receipt service in communication with the management device to obtain details regarding the transaction.

The invention also relates to a check-out system comprising:
a registration device; and
one or a plurality of payment device(s) as defined above in communication with the registration device, wherein
the registration device is configured to:
   acquire a merchandise code corresponding to merchandise to be purchased in a transaction,
   generate a list of each merchandise to be purchased in the transaction and payment information including a payment amount required for the transaction,
   acquire a user code corresponding to a user of an electronic receipt service, send the payment information to the payment device, and
   if the user code is acquired, send the user code to the payment device.

The invention further relates to a non-transitory computer readable medium containing instructions for a payment device in a system including the payment device and a registration device in communication with each other, the instructions causing the payment device to perform the following functions:
receive, from the registration device in the check-out system, payment information for a transaction;
receive, from the registration device, a user code corresponding to a user who uses an electronic receipt service;
perform a payment process based on the payment information sent by the registration device and input from a customer;
acquire the user code via user input through the payment device;
generate receipt information including the merchandise purchased in the transaction and information regarding the payment process;
if the user code is not received from the registration device or not acquired by the payment device, print a receipt sheet based on the receipt information; and
if the user code is received from the registration device or acquired by the payment device, transmit the user code and the receipt information to a management device which stores the receipt information in association with the user code.

Preferably, the instructions further cause a display unit of the payment device to display a screen that instructs the user to input the user code.

Preferably still, the instructions further cause the display unit to not display the screen that instructs the user to input the user code when the user code has been received from the registration device or acquired by the payment device.

Preferably yet, the instructions further cause the display unit to display a screen that informs the user that the receipt sheet will not be printed when the user code has been received from the registration device or acquired by the payment device.

Typically, the instructions further cause the screen to be displayed while a registration process of acquiring one or more merchandise codes is ongoing.

Typically still, the instructions further cause a display unit of the payment device to display a screen that instructs the user to contact an electronic receipt service in communication with the management device to obtain details regarding the transaction.

The invention also concerns a check-out method using a check-up system including the payment device and a registration device in communication with each other, the method comprising the steps of:
receiving, from the registration device in the check-out system, payment information for a transaction;
receiving, from the registration device, a user code corresponding to a user who uses an electronic receipt service;
performing a payment process based on the payment information sent by the registration device and input from a customer;
acquiring the user code via user input through the payment device;
generating receipt information including the merchandise purchased in the transaction and information regarding the payment process;
if the user code is not received from the registration device or not acquired by the payment device, print a receipt sheet based on the receipt information; and
if the user code is received from the registration device or acquired by the payment device, transmit the user code and the receipt information to a management device which stores the receipt information in association with the user code.

### DESCRIPTION OF THE DRAWINGS

The above and other objects, features and advantages will be made apparent from the following description of the preferred embodiments, given as non-limiting examples, with reference to the accompanying drawings, in which:
FIG. 1 is a perspective view of a check-out system according to an embodiment.
FIG. 2 is a block diagram illustrating an example configuration of a merchandise registration apparatus and a payment apparatus.
FIGS. 3 and 4 are flow charts of an example sequence of operations for performing a control process in a merchandise registration apparatus.
FIG. 5 is a diagram illustrating an example registration screen before acquisition of a user code.
FIG. 6 is a diagram illustrating an example registration screen after the acquisition of the user code.
FIGS. 7 and 8 are flow charts of an example sequence of operations for performing a control process in a payment apparatus.
FIG. 9 is a diagram illustrating an example first selection screen.
FIG. 10 is a diagram illustrating an example second selection screen.
FIG. 11 is a diagram illustrating an example first end screen.
FIG. 12 is a diagram illustrating an example second end screen.
FIG. 13 is a flow chart of an example sequence of operations for performing a control process in a payment apparatus.

### DETAILED DESCRIPTION

A check-out system according to an embodiment includes a registration device and a payment device in communication with the registration device. The registration device acquires a merchandise code corresponding to a merchandise to be purchased in a transaction. The registration device also generates a list of each merchandise to be purchased in the transaction and payment information including a payment amount required for the transaction. The registration device can also acquire a user code corresponding to a user of an electronic receipt service. The payment information is sent to the payment device, and if the user code is acquired, the user code is also sent to the payment device. The payment device performs a payment process based on the payment information sent by the registration device and input from a customer. The payment device can also acquire the user code. The payment device generates receipt information including the merchandise purchased in the transaction and information regarding the payment process. If the user code is not received from the registration device or acquired by the payment device, the payment device prints a receipt sheet based on the receipt information. If the user code is received from the registration device or acquired by the payment device, the payment device transmits the user code and the receipt information to a management device which stores the receipt information in association with the user code.

Hereinafter, an example of an embodiment will be described with reference to the drawings.

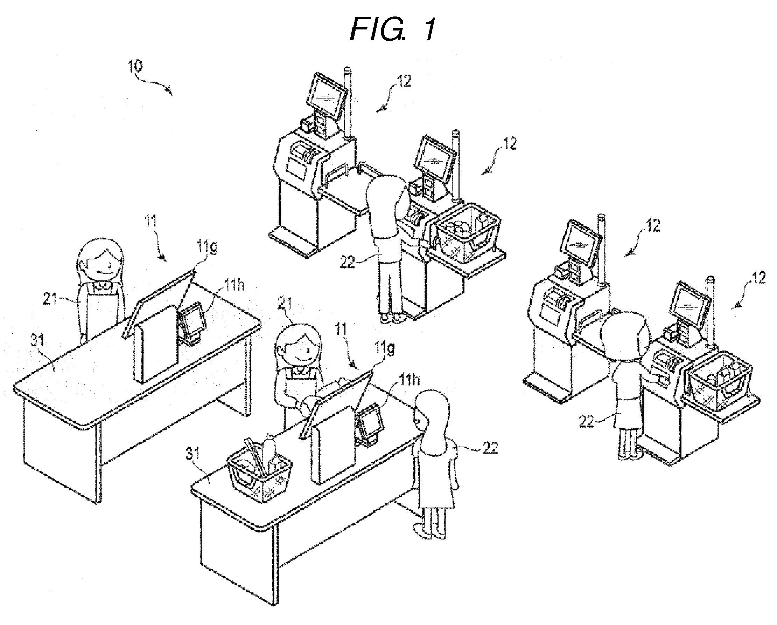

FIG. 1 is a perspective view of a check-out system 10 according to an embodiment.

The check-out system 10 includes one or more merchandise registration devices 11, and one or more payment devices 12. FIG. 1 illustrates the check-out system 10 including two merchandise registration devices 11 and four payment devices 12. The number of merchandise registration devices 11 and payment devices 12 which are included in the check-out system 10 is arbitrary. The ratio between the number of merchandise registration devices 11 and the number of payment devices 12 is also arbitrary. The merchandise registration device 11 and the payment device 12 are provided in a check-out area of a store such as a supermarket.

The operator of the merchandise registration device 11 is a salesperson 21 of the store, and works as a checker. The operator of the payment device 12 is a shopper 22 who purchases merchandise which is sold at the store. Incidentally, the shopper 22 may perform some operation of the merchandise registration device 11. In addition, the salesperson may operate the payment device 12 in some cases.

The merchandise registration device 11 is provided on a work table 31 in FIG. 1. The work table 31 has a rectangular top plate. A plurality of work tables 31 which are arranged so as to be substantially parallel in the longitudinal directions of the top plates form passages for shoppers 22.

The merchandise registration device 11 performs various functions, including purchase registration, payment information generation, and providing the payment information to the payment device 12. Purchase registration includes registering the merchandise that the shopper 22 has selected for purchase and brought to the check-out area, as purchase merchandise. The payment information is information required in the payment process.

The payment device 12 performs the payment process based on the payment information, when the payment information is provided from the merchandise registration device 11. The payment process includes paying for the purchase merchandise.

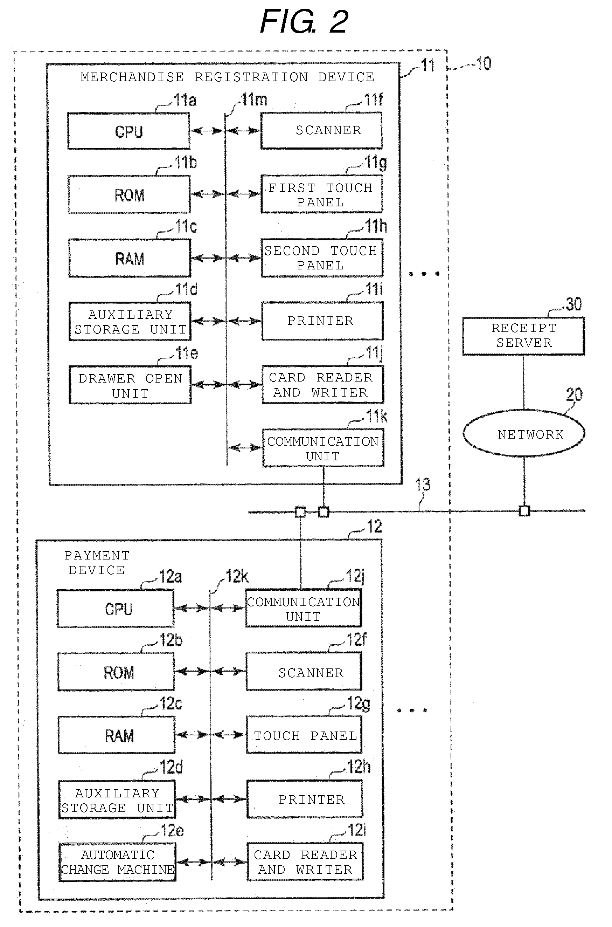

FIG. 2 is a block diagram illustrating example configurations of the merchandise registration device 11 and the payment device 12.

The merchandise registration device 11 and the payment device 12 are connected to a local area network (LAN) 13. Other communication networks such as the Internet or a wireless LAN can be used, instead of the LAN 13. Alternatively, the merchandise registration device 11 and the payment device 12 may exchange information through a server.

The merchandise registration device 11 includes a central processing unit (CPU) 11a, a read only memory (ROM) 11b, a random access memory (RAM) 11c, an auxiliary storage unit 11d, a drawer open unit 11e, a scanner 11f, a first touch panel 11g, a second touch panel 11h, a printer 11i, a card reader and writer 11j, a communication unit 11k, and a transmission system 11m.

The CPU 11a, the ROM 11b, the RAM 11c and the auxiliary storage unit 11d are connected by the transmission system 11m and may be provided as a computer.

The CPU 11a corresponds to the central processor of the computer. The CPU 11a controls respective units in order to achieve various functions as the merchandise registration device 11, based on the operating system, the middleware, and/or the application programs, which are stored in the ROM 11b and the RAM 11c.

The ROM 11b corresponds to the main memory storage of the computer. The ROM 11b stores the operating system. The ROM 11b may store the middleware and application programs in some cases. Further, the ROM 11b may also store data that is referred to when the CPU 11a performs various processes.

The RAM 11c corresponds to the main working memory of the computer. The RAM 11c stores data that is referred to when the CPU 11a performs various processes. Further, the RAM 11c is utilized as a so-called work area for storing data that is temporarily used when the CPU 11a performs various processes.

The auxiliary storage unit 11d corresponds to the auxiliary storage of the computer. The auxiliary storage unit 11d stores data that is used when the CPU 11a performs various processes or data that is generated through the process performed by the CPU 11a. As the auxiliary storage unit 11d, for example, an electric erasable programmable read only memory (EEPROM), a hard disk drive (HDD), a solid state drive (SSD), or the like may be used.

The application program stored in the ROM 11b or the auxiliary storage unit 11d includes a control program for performing a control process to be described later. The transport and installation of the merchandise registration device 11 is generally performed in the state where the control program is stored in the ROM 11b or the auxiliary storage unit 11d. However, the merchandise registration device 11 may be installed in the state where the control program is not stored in the ROM 11b or the auxiliary storage unit 11d. In such a case, the control program may be transferred to the merchandise registration device by being read from a removable recording medium or through a network. For example, the control program may be written into the auxiliary storage unit 11d of the merchandise registration device 11 in response to the operation of the user. As the removable recording medium, a magnetic disk, a magneto-optical disk, an optical disk, a semiconductor memory, or the like can be used.

The drawer open unit 11e automatically opens a drawer that accommodates money.

The scanner 11f obtains the merchandise code of the merchandise. As the scanner 11f, various known types of scanners can be used as they are. The scanner 11f may be implemented with only one of various known types, or may be implemented with a plurality of types. In other words, the scanner 11f may be a two-dimensional code scanner of a fixed type or a hand-held type. The scanner 11f may be a scanner of a type that identifies merchandise from the image of merchandise, using an image recognition technique.

Each of the first and second touch panels 11g and 11h includes a display device and a touch sensor. The display device may display a certain screen such as a graphical user interface (GUI) screen. As the display device, for example, a known device such as a color LCD may be used. The touch sensor is arranged to overlap the display surface of the display device. The touch sensor detects the operator's touch position on the display surface of the display device, and sends the position information to the CPU 11a. As the touch sensor, a known device may be used. As illustrated in FIG. 1, the operation surface of the first touch panel 11g is oriented towards a location where the salesperson 21 operating the merchandise registration device 11 should be positioned. As illustrated in FIG. 1, the operation surface of the second touch panel 11h is oriented towards a location where the shopper who purchases the merchandise to be registered in the merchandise registration device 11 should be positioned. The second touch panel 11h is an example of the operation device.

The printer 11i may be, for example, a thermal printer, a dot impact printer, or the like. The printer 11i issues a receipt by printing various characters and/or images on a receipt sheet.

The card reader and writer 11j reads data recorded on the card, and writes data into the card. The card reader and writer 11j may read various types of cards, such as a membership card and a point card, in addition to payment cards such as a credit card, a debit card, an electronic money card, and a prepaid card. The card reader and writer 11j may be a magnetic, contact, and/or contactless type of card reader/writer device, and may include a plurality of such types of card reader/writer devices.

The communication unit 11k performs communication through the LAN 13.

The transmission system 11m transmits data exchanged between the CPU 11a, the ROM 11b, the RAM 11c, the auxiliary storage unit 11d, the drawer open unit 11e, the scanner 11f, the first touch panel 11g, the printer 11i, the card reader and writer 11j, and the communication unit 11k. As the transmission system 11m, a well-known system including various buses such as a system bus and various interface circuits connecting the buses and respective units can be used.

As hardware of the merchandise registration device 11, for example, an existing POS terminal may be used.

The payment device 12 includes a CPU 12a, a ROM 12b, a RAM 12c, an auxiliary storage unit 12d, an automatic change machine 12e, a scanner 12f, a touch panel 12g, a printer 12h, a card reader and writer 12i, a communication unit 12j, and a transmission system 12k.

The CPU 12a, the ROM 12b, the RAM 12c and the auxiliary storage unit 12d are connected by the transmission system 12k and may be provided as a computer.

The CPU 12a corresponds to the central processor of the computer. The CPU 12a controls respective units for performing various operations as the payment device 12, based on the operating system, the middleware, and/or the application programs, which are stored in the ROM 12b and the RAM 12c.

The ROM 12b corresponds to the main memory storage of the computer. The ROM 12b stores the operating system. The ROM 12b may store the middleware and application programs in some cases. Further, the ROM 12b may also store data that is referred to when the CPU 12a performs various processes.

The RAM 12c corresponds to the main working memory of the computer. The RAM 12c stores data that is referred to when the CPU 12a performs various processes. Further, the RAM 12c is utilized as a so-called work area for storing data that is temporarily used when the CPU 12a performs various processes.

The auxiliary storage unit 12d corresponds to the auxiliary memory of the computer. The auxiliary storage unit 12d stores data used when the CPU 12a performs various processes or data generated in the process performed by the CPU 12a. As the auxiliary storage unit 12d, for example, an EEPROM, an HDD, an SSD, or the like may be used.

The application program stored in the ROM 12b or the auxiliary storage unit 12d includes a control program for performing a control process to be described later. The transport and installation of the payment device 12 is generally performed in the state where the control program is stored in the ROM 12b or the auxiliary storage unit 12d. However, the payment device 12 may be installed in the state where the control program is not stored in the ROM 12b or the auxiliary storage unit 12d. In such a case, the control program may be read from a removable recording medium or received through a network. For example, the control program may be written into the auxiliary storage unit 12d of the payment device 12 in response to the operation of the user. As the removable recording medium, a magnetic disk, a magneto-optical disk, an optical disk, a semiconductor memory, or the like may be used.

The automatic change machine 12e collects coins and bills that are input. Further, the automatic change machine 12e discharges the coins and bills as change.

The scanner 12f obtains the merchandise code of the merchandise. As the scanner 12f, various known types can be used as they are. The scanner 12f may be implemented as only one of various known types, or may be implemented as a plurality of types. In other words, the scanner 12f may be a two-dimensional code scanner of a fixed type or a hand-held type. The scanner 12f may include scanners of a type that identifies the merchandise from the image of merchandise, by using an image recognition technique.

The touch panel 12g includes a display device and a touch sensor. The display device may display a certain screen such as a GUI screen. As the display device, for example, a known device such as a color LCD may be used. The touch sensor is arranged to overlap the display surface of the display device. The touch sensor detects the operator's touch position on the display surface of the display device, and sends the position information to the CPU 12a. As the touch sensor, a known device may be used.

The printer 12h issues a receipt by printing various characters and images on the receipt sheet. The printer 12h may be, for example, a thermal printer, a dot impact printer, or the like. In addition, the receipt sheet refers to a sheet-like medium for printing, but the material thereof is not limited to paper.

The card reader and writer 12i reads data recorded on the card, and writes data into the card. The card reader and writer 12i may read various types of cards, such as a membership card and a point card, in addition to payment cards such as a credit card, a debit card, an electronic money card, and a prepaid card. The card reader and writer 12i may be a magnetic, contact, and/or contactless type of card reader/writer device, and may include a plurality of such types of card reader/writer devices.

The communication unit 12j performs communication through the LAN 13. The communication unit 12j can also communicate with the receipt server 30 through the network 20 connected to the LAN 13. The network 20 is typically the Internet. The network 20 may be other types of communication networks such as a dedicated line network. The receipt server 30 performs various processing for providing an electronic receipt service, including collecting electronic receipt data from the payment device 12, management of associating the collected electronic receipt data with a user code, and displaying the electronic receipt data on a display terminal. Therefore, the receipt server 30 is an example of a management device.

The transmission system 12k transmits data exchanged between the CPU 12a, the ROM 12b, the RAM 12c, the auxiliary storage unit 12d, the automatic change machine 12e, the scanner 12f, the touch panel 12g, the printer 12h, the card reader and writer 12i, and the communication unit 12j. As the transmission system 12k, a well-known system including various buses such as a system bus and various interface circuits connecting the buses and respective units can be used.

As hardware of the payment device 12, for example, an existing self-POS terminal may be used.

Next, the operation of the check-out system 10 configured as described above will be described. Incidentally, the content of the processing to be described below is an example, and various processes capable of achieving the same results can be appropriately utilized.

When the merchandise registration device 11 is activated in a mode in which the purchase merchandise is registered, the CPU 11a starts a control process according to the control program stored in the ROM 11b or the auxiliary storage unit 11d.

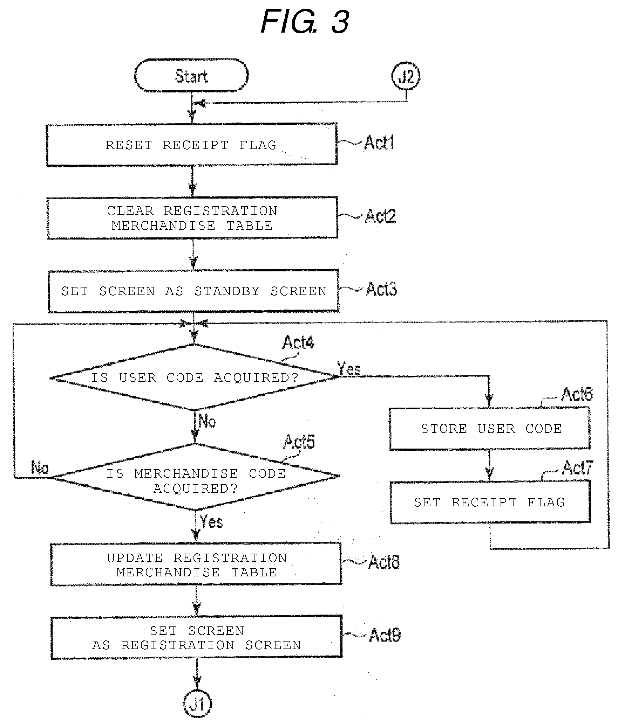

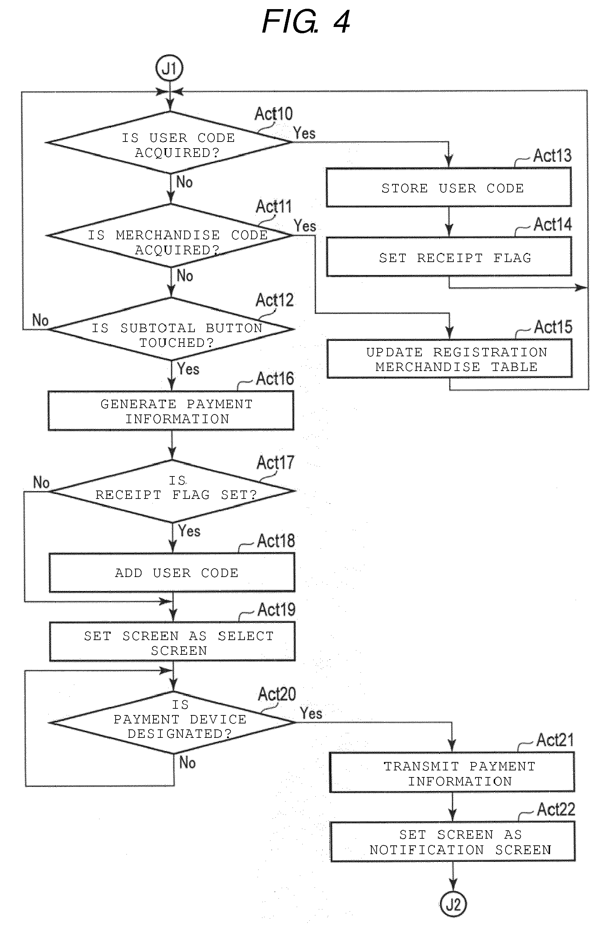

FIGS. 3 and 4 are flow charts of an example sequence of operations for performing the control process of the CPU 11a.

In Act 1, the CPU 11a resets a receipt flag. The receipt flag indicates a setting for whether or not to use the electronic receipt service, depending on the receipt flag setting. The receipt flag is, for example, one bit of data stored in the RAM 11c.

In Act 2, the CPU 11a clears a registration merchandise table that is stored in the RAM 11c. The registration merchandise table is a data table that includes information on the merchandise for which purchase registration is completed.

In Act 3, the CPU 11a sets an area of a screen on the second touch panel 11h as a standby screen. The standby screen indicates that it is possible to start the purchase registration for a new transaction. The form and content of the information that is indicated may be arbitrary.

In Act 4, the CPU 11a checks whether or not a user code for identifying the user of the electronic receipt service is acquired. If it is determined that the user code is not acquired (NO in Act 4), the CPU 11a proceeds to Act 5.

In Act 5, the CPU 11a checks whether or not the merchandise code of merchandise is acquired. If the merchandise code is not acquired (NO in Act 5), the CPU 11a returns to Act 4.

Thus, in Act 4 and Act 5, the CPU 11a waits for the acquisition of the user code, or the acquisition of the merchandise code. In addition, the CPU 11a may check for the occurrence of other events such as execution of other operations, in the standby state, and proceed to the process according to the occurred event.

When the purchase registration of the merchandise is performed in the merchandise registration device 11, the shopper 22 stands in front of the merchandise registration device 11. When the shopper 22 uses an electronic receipt service with respect to this transaction, the shopper 22 presents the shopper's user code to the salesperson 21. Specifically, the shopper 22 presents, for example, a screen of his own smartphone to the salesperson 21, in a state of displaying a membership card screen including a bar code that represents the user code on the smartphone. Then, the salesperson 21 uses, for example, the scanner 11f to read the bar code into the merchandise registration device 11. In this case, the CPU 11a makes a determination of Yes in Act 4, and proceeds to Act 6.

In Act 6, the CPU 11a stores the user code represented by the bar code that is read by the scanner 11f, into the RAM 11c or the auxiliary storage unit 11d. In this manner, the computer is controlled by the CPU 11a based on the control program to function as a first acquisition unit.

In Act 7, the CPU 11a sets the receipt flag. Thereafter, the CPU 11a returns to the standby state of Act 4 and Act 5.

Incidentally, the CPU 11a acquires the merchandise code, according to the operation by the salesperson 21, through the well-known processing other than the control process illustrated in FIGS. 3 and 4. When Yes is determined in Act 5 because the merchandise code is acquired in the standby state of Act 4 and Act 5 illustrated in FIG. 3, the CPU 11a proceeds to Act 8.

In Act 8, the CPU 11a updates the registration merchandise table to include the acquired merchandise code.

In Act 9, the CPU 11a sets some region of the screen of at least one of the first touch panel 11g and the second touch panel 11h as a registration screen. The registration screen displays the contents of the registration merchandise table and the like and is intended to allow the shopper 22 to check the status of the registration. The CPU 11a changes the registration screen depending on a state of the receipt flag.

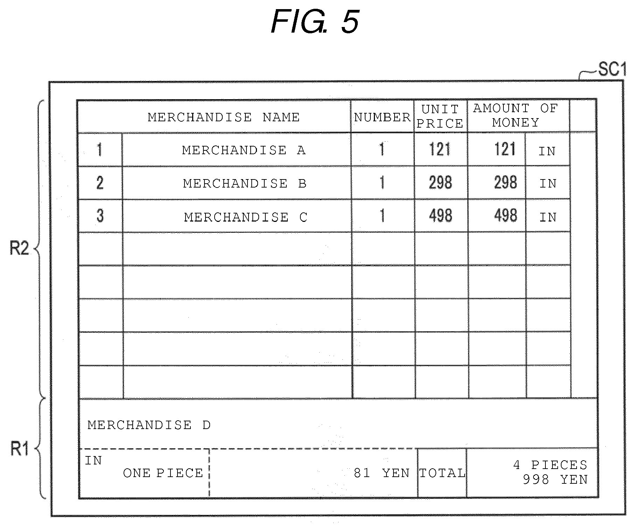

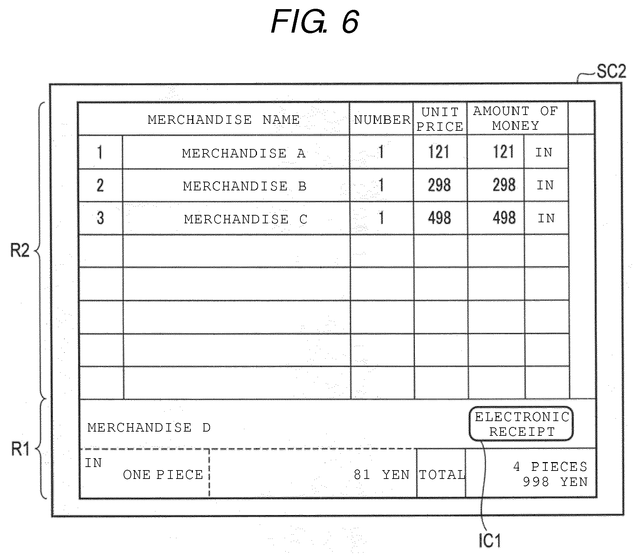

FIG. 5 is a diagram illustrating an example registration screen SC1 displayed before the acquisition of a user code. FIG. 6 is a diagram illustrating an example registration screen SC2 displayed after the acquisition of the user code.

Before the user code is acquired, in other words, in a state where the receipt flag is not set, the CPU 11a sets a screen such as the registration screen SC1. After the user code is acquired, in other words, in a state where the receipt flag is set, the CPU 11a sets a screen such as the registration screen SC2.

Both registration screens SC1 and SC2 include regions R1 and R2. The registration screen SC2 further includes an icon IC1.

The region R1 is a region for representing the merchandise name, the number, and the unit price of the merchandise most recently registered, and the total number and the total money of the purchase merchandise after the merchandise is registered. The region R2 is a region for representing the list of merchandise names, the numbers, the unit prices, and the amounts of money of the merchandise that was registered earlier than the merchandise displayed on the registration screen SC1. The Icon IC1 represents a setting in which the electronic receipt service is used.

Incidentally, the registration screens SC1 and SC2 and the corresponding regions R1 and R2 display various information regarding a plurality of merchandise for which purchase registration is made. However, when the CPU 11a proceeds to Act 9, the registration merchandise table includes only information regarding one of the merchandise. Therefore, on the registration screen, the information regarding the merchandise is represented in region R1, and is not represented in region R2.

The CPU 11a controls the first touch panel 11g to display various functional buttons such as a merchandise button by which the salesperson 21 designates merchandise and a subtotal button, in a region other than the regions R1 and R2.

In Act 10 of FIG. 4, the CPU 11a checks whether or not the user code is acquired. If the user code is not acquired (NO in Act 10), the CPU 11a proceeds to Act 11.

In Act 11, the CPU 11a checks whether or not the merchandise code of merchandise is acquired. If the merchandise code is not acquired (NO in Act 11), the CPU 11a proceeds to Act 12.

In Act 12, the CPU 11a checks whether or not the subtotal button that is displayed on the screen of the first touch panel 11g is touched. If the operation is not performed (NO in Act 12), the CPU 11a returns to Act 10.

Thus, in Act 10 through Act 12, the CPU 11a waits for the acquisition of the user code, the acquisition of a new merchandise code, or the touch of the subtotal button. In addition, the CPU 11a may check for the occurrence of other events such as execution of other operations, in the standby state, and proceed to the process according to the occurred event.

While the purchase registration is made, the shopper 22, who waits for the completion of the purchase registration, may present a screen of his own smartphone to the salesperson 21, in a state of displaying a membership card screen including a bar code representing the user code on the smartphone. The salesperson 21 uses the scanner 11f so that the bar code representing the user code is read into the merchandise registration device 11. In this case, the CPU 11a makes a determination of Yes in Act 10, and proceeds to Act 13.

In Act 13, the CPU 11a stores the user code represented by the bar code that is read by the scanner 11f, into the RAM 11c or the auxiliary storage unit 11d.

In Act 14, the CPU 11a sets the receipt flag. Thereafter, the CPU 11a returns to the standby state of Act 10 through Act 12. In response, the CPU 11a updates the registration screen to include icon IC1.

Meanwhile, when Yes is determined in Act 11 because the merchandise code is acquired in the manner similar to that described above, the CPU 11a proceeds to Act 15.

In Act 15, the CPU 11a updates the registration merchandise table to include the acquired merchandise code. In response thereto, the CPU 11a updates the registration screen to conform to the contents of the updated registration merchandise table. Thereafter, the CPU 11a returns to the standby state of Act 10 through Act 12. The registration merchandise table, generated in this way, represents a list of purchase merchandise. In this manner, the computer is controlled by the CPU 11a based on the control program to function as a first generation unit.

Then, when the registration of all of merchandise for one transaction is completed, the salesperson 21 touches the subtotal button on the first touch panel 11g. When Yes is determined in Act 12 because the touch of the subtotal button is detected by the first touch panel 11g, the CPU 11a proceeds to Act 16.

In Act 16, the CPU 11a generates payment information for paying for the registered merchandise, based on the contents of the registration merchandise table at this time. The payment information includes a list of registered merchandise. The payment information may include information such as the total number and total price for the purchase merchandise. In this manner, the computer is controlled by the CPU 11a based on the control program to function as a second generation unit.

In Act 17, the CPU 11a checks whether or not the receipt flag is at a set state. When Yes is determined because the receipt flag is at a set state, the CPU 11a proceeds to Act 18.

In Act 18, the CPU 11a adds the user code stored in the RAM 11c or the auxiliary storage unit 11d to the payment information that is generated in Act 16. Thereafter, the CPU 11a proceeds to Act 19. In addition, when No is determined in Act 17 because the receipt flag is not at a set state, the CPU 11a passes Act 18 and proceeds to Act 19.

In Act 19, the CPU 11a sets a region of a screen on the first touch panel 11g as a select screen. The select screen is a GUI screen for the operator to designate the payment device 12 which is the destination of the payment information, and includes a plurality of buttons to which different payment devices 12 are respectively allocated.

In Act 20, the CPU 11a checks whether or not any payment device is designated. When No is determined because the payment device 12 is not designated, the CPU 11a repeats Act 20. Thus, in Act 20, the CPU 11a waits for the designation of the payment device 12 to be the destination of the payment information.

At the time of the standby state of Act 20, when the payment device 12 is designated by, for example, any button on the select screen being touched by the salesperson 21, the CPU 11a makes a determination of Yes in Act 20, and proceeds to Act 21.

In Act 21, the CPU 11a transmits the payment information, to the designated payment device 12. Specifically, the CPU 11a controls the communication unit 11k to transmit the payment information via the LAN 13, with the designated payment device 12 as the destination. This allows the payment device 12 to be notified of the payment information. In this manner, the computer is controlled by the CPU 11a based on the control program to function as a notification unit.

In Act 22, the CPU 11a sets a region of the screen on the first touch panel 11g as a notification screen.

The notification screen is a screen for the salesperson 21 to recognize that the payment information is transmitted to the designated payment device 12 for payment processing. The payment process is performed in the payment device 12 in response to the operation by the shopper 22.

When a button represented on the notification screen for the salesperson 21 to close the notification screen is touched, the CPU 11a returns to Act 1 of FIG. 3, and repeats the subsequent processes in the same manner as described above.

Meanwhile, when the payment device 12 is activated, the CPU 12a starts the control process according to the control program that is stored in the ROM 12b or the auxiliary storage unit 12d.

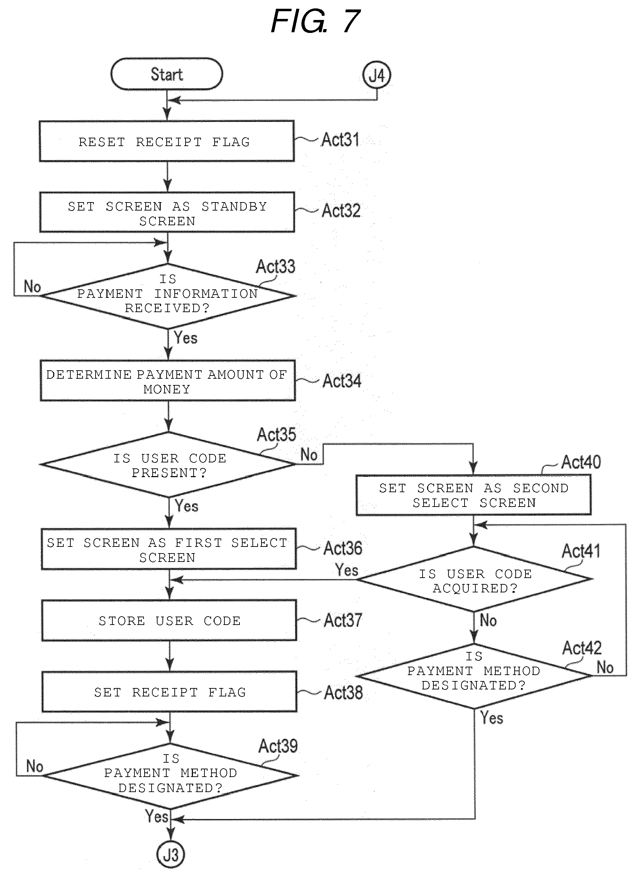

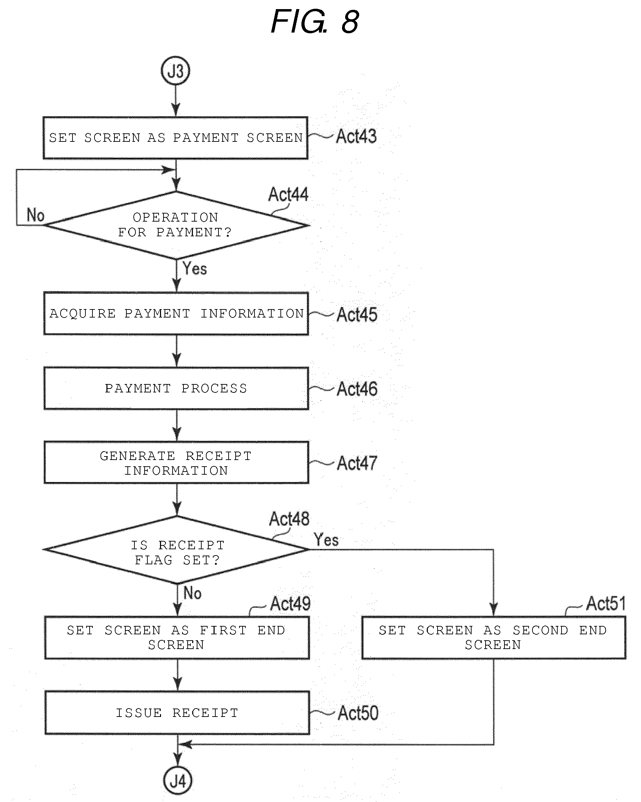

FIG. 7 and FIG. 8 are flow charts of the control process of the CPU 12a.

In Act 31 of FIG. 7, the CPU 12a resets the receipt flag. The receipt flag indicates a setting of whether or not to use the electronic receipt service, depending on the receipt flag setting. The receipt flag is, for example, one bit of data stored in the RAM 12c.

In Act 32, the CPU 12a sets the screen on the touch panel 12g as a standby screen. The standby screen represents a state where the payment is not performed, and the information represented on the standby screen may be arbitrary. For example, it is assumed that the standby screen displays an image indicating that the payment process cannot be performed, or any image representing advertisement or the like as a screen saver.

In Act 33, the CPU 12a checks whether or not the payment information is received. When the payment information is not received (NO in Act 22), the CPU 12a repeats Act 33. Thus, in Act 33, the CPU 12a waits for receipt of payment information.

The communication unit 12j provided in the payment device 12, which is a destination of the payment information transmitted from the merchandise registration device 11 to the LAN 13, receives the payment information, and stores the received payment information in the RAM 12c or the auxiliary storage unit 12d.

Since the payment information is received in this manner, the CPU 12a makes a determination of Yes in Act 33, and proceeds to Act 34.

In Act 34, the CPU 12a determines a payment amount, based on the payment information. Specifically, the CPU 12a calculates, for example, the total money of the respective amounts of money of purchased merchandise on the merchandise list included in the payment information, and determines the total money as the payment amount. Alternatively, when the total money is included in the payment information, the total money is determined as the payment amount. Here, when the CPU 12a calculates the total money, the payment device 12 is also referred to as an accounting device.

In Act 35, the CPU 12a checks whether or not the user code is included in the received payment information. When the user code is included (YES in Act 35), the CPU 12a proceeds to Act 36.

In Act 36, the CPU 12a sets the screen on the touch panel 12g as a first select screen. The first select screen is a GUI screen for the operator to designate a payment method.

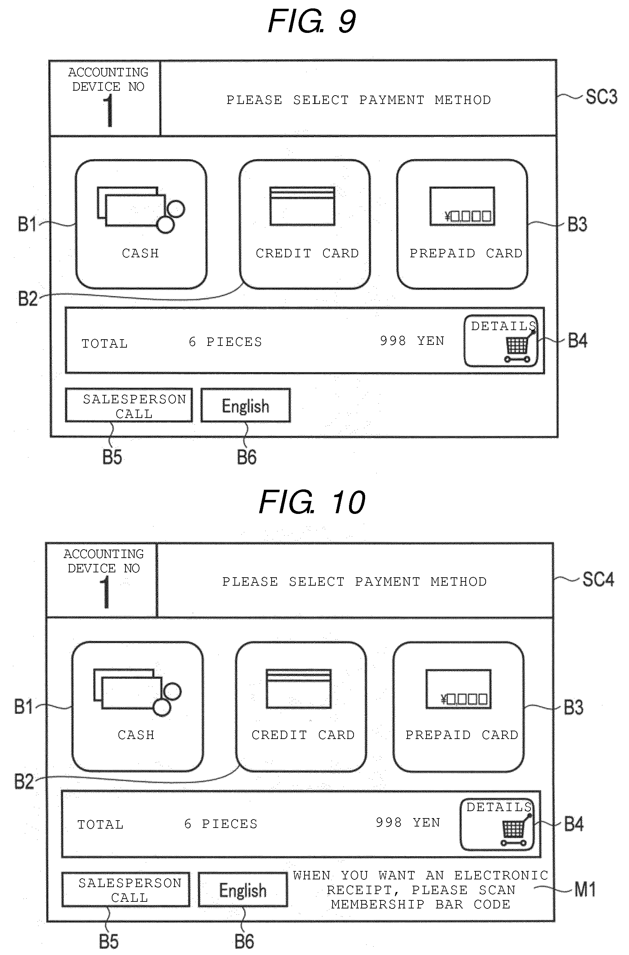

FIG. 9 is a diagram illustrating a first select screen SC3 as an example.

The first select screen SC3 includes six buttons B1, B2, B3, B4, B5, and B6 which are intended to be touched by the operator for various operations. Cash payment, credit payment, and prepaid card payment are allocated respectively to the buttons B1 to B3. Salesperson call and language switching are allocated respectively to the buttons B5 and B6.

In Act 37, the CPU 12a stores the user code included in the received payment information in the RAM 12c or the auxiliary storage unit 12d.

In Act 38, the CPU 12a sets the receipt flag.

In Act 39, the CPU 12a checks whether or not a payment method is designated. When No is determined because the operation of designating a payment method is not performed, the CPU 12a repeats Act 39. Thus, in Act 39, the CPU 12a waits for the designation of the payment method. Incidentally, although not illustrated, the CPU 12a also waits for the execution of an operation other than the operation of designating a payment method in the standby state. When such an operation is performed, the CPU 12a proceeds to a process corresponding to the performed operation. For example, when the touch on the button B5 is detected by the touch panel 12g, the CPU 12a proceeds to a process for a calling operation in a monitoring terminal, not illustrated in FIGS. 1 and 2. Further, for example, when the touch on the button B6 is detected by the touch panel 12g, the CPU 12a proceeds to a process for displaying the text in English (or other indicated language) on the screen of the touch panel 12g.

When the user code is not included in the received payment information (No in Act 35), the CPU 12a proceeds to Act 40.

In Act 40, the CPU 12a sets the screen on the touch panel 12g as a second select screen. The second select screen is a GUI screen provided for the operator to designate a payment method.

FIG. 10 is a diagram illustrating a second select screen SC4 as an example. Incidentally, in FIG. 10, since the same reference numerals are given to the same elements as those in FIG. 9, a detailed description thereof will be omitted.

The second select screen SC4 includes six buttons B1, B2, B3, B4, B5, and B6 which are intended to be touched by the operator for various operations, and a text message M1. In other words, the second select screen SC4 is similar to the first select screen SC3, with the text message M1 added. The text message M1 is intended to instruct the shopper 22 to scan a bar code representing the user code over the scanner 12f in order to use the electronic receipt service.

In Act 41, the CPU 12a checks whether or not the user code is acquired. When the user code is not acquired (NO in Act 41), the CPU 12a proceeds to Act 42.

In Act 42, the CPU 12a checks whether or not a payment method is designated. When the operation of designating a payment method is not performed (NO in Act 42), the CPU 12a returns to Act 41.

Thus, in Act41 and Act 42, the CPU 12a waits for the acquisition of the user code, or the designation of a payment method. Incidentally, although not illustrated, in the standby state, the CPU 12a also waits for the execution of other operations in the same process as that performed in the standby state of Act 39.

When the shopper 22 wants to use an electronic receipt service, the shopper 22 scans the bar code displayed on the screen of a smartphone of the shopper 22 using the scanner 12f, based on the text message M1. Thus, the scanner 12f reads the bar code. In this case, the CPU 12a makes a determination of Yes in Act 41, and executes the processes subsequent to Act 37 in the same manner as described above. However, in Act 37, the CPU 12a stores the user code represented by the bar code which is read by the scanner 12f. In this manner, the computer is controlled by the CPU 12a based on the control program to function as a second acquisition unit. Setting the screen on the touch panel 12g as the second select screen corresponds to a guide operation of guiding the operator to cause the second acquisition unit to acquire the user code. Accordingly, the function as a guide unit is implemented by the cooperation of the CPU 12a and the touch panel 12g.

When the screen of the touch panel 12g displays the first select screen or the second select screen, the operator designates a payment method, by touching a button to which a payment method to be used for payment is assigned, out of buttons B1 to B3. When such an operation is detected by the touch panel 12g, the CPU 12a makes a determination of Yes in Act 39 or Act 42, and proceeds to Act 43 in FIG. 8. In this manner, the computer is controlled by the CPU 12a based on the control program to function as a select unit that selects a payment method.

In Act 43, the CPU 12a sets the screen on the touch panel 12g as a payment screen. The payment screen guides an operation by the operator for the input of payment information for payment. For example, when cash payment is designated as the payment method, the CPU 12a causes the payment screen to display content to instruct the operator to insert cash.

In Act 44, the CPU 12a checks whether or not the operation for payment is performed. When the operation for payment is not performed (NO in Act 44), the CPU 12a repeats Act 44. Thus, in Act 44, the CPU 12a waits for the execution of the operation for payment. Incidentally, although not illustrated, the CPU 12a also waits for the execution of an operation other than the operation for payment in the standby state. When such an operation is performed, the CPU 12a proceeds to a process (not illustrated) corresponding to the operation.

The operator performs an operation for payment, according to the payment screen. For example, when cash payment is designated, the operator inserts bills and coins to a bill slot and a coin slot of the automatic change machine 12e. In addition, when credit payment or pre-paid card payment is designated, the operator inserts a credit card or a prepaid card to an insertion port of the card reader and writer 12i. When one or both of bills and coins are inserted, the automatic change machine 12e counts the inserted bills and coins so as to obtain the inserted amount of money. Further, when the credit card is inserted, the card reader and writer 12i reads the data recorded in the credit card. When a prepaid card is inserted, the card reader and writer 12i reads the data of the balance recorded in the prepaid card.

When the payment operation is performed (YES in Act 44), the CPU 12a proceeds to Act 45.

In Act 45, the CPU 12a acquires the input amount of money obtained by the automatic change machine 12e or the data read by the card reader and writer 12i as described above, as payment information.

In Act 46, the CPU 12a executes the payment process using the payment information. Since the payment process is a similar process as that performed in the existing same type of payment device, the detailed description thereof will be omitted. In this manner, the computer is controlled by the CPU 12a based on the control program to function as a payment unit that performs payment process.

In Act 47, the CPU 12a generates receipt information, and stores the generated receipt information in the RAM 12c or the auxiliary storage unit 12d. The receipt information has, for example, a format such as a text data format. The CPU 12a includes information to be described on the receipt such as a merchandise list out of the payment information, and information indicating the result of the payment process, in the receipt information. In addition, the information indicating the result of the payment process includes, for example, information such as the amount of money to be paid, a deposit amount, a change amount, or a payment date and time, when the cash payment is performed. In other words, the receipt information includes various information to be described on the receipt, and the particular information included in the receipt information is optional. However, when the user code is stored in the RAM 12c or the auxiliary storage unit 12d, the CPU 12a includes the user code in the receipt information so that the user code can be identified. In this manner, the computer is controlled by the CPU 12a based on the control program to function as a third generation unit.

In Act 48, the CPU 12a checks whether or not the receipt flag is set. When the receipt flag is not set (NO in Act 48), the CPU 12a proceeds to Act 49.

In Act 49, the CPU 12a sets the screen on the touch panel 12g as a first end screen. The first end screen notifies the operator that a receipt sheet is issued.

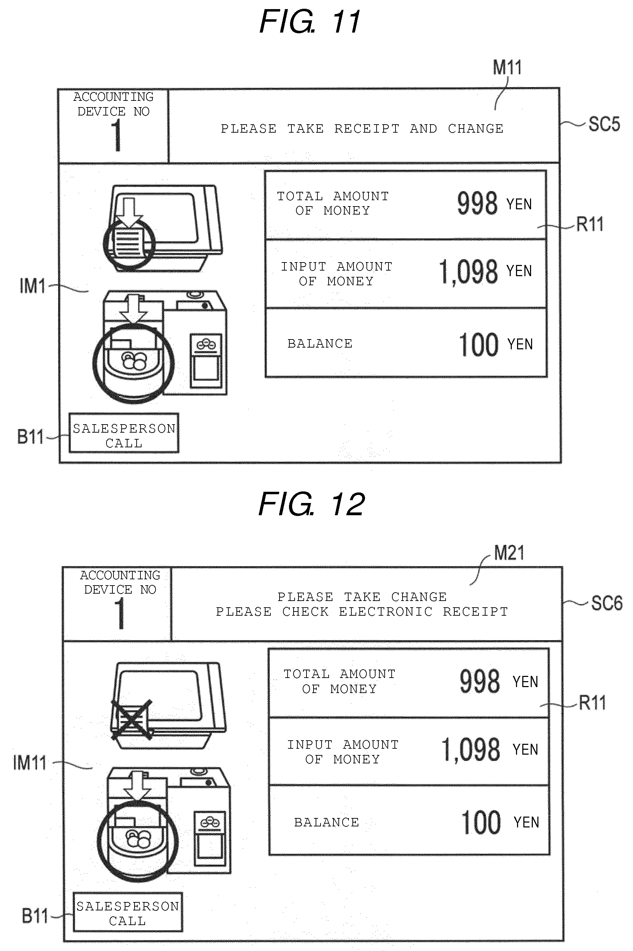

FIG. 11 is a diagram illustrating an example first end screen SC5.

The first end screen SC5 includes a text message M11, an image IM1, a region R11, and a button B 11. The image IM1 represents the state in which the receipt sheet is issued. Various amounts of money indicated in the region R11 is changed depending on each transaction. The first end screen SC5 represents an example of a case where a change is dispensed, in addition to the issue of a receipt sheet. The CPU 12a sets the first end screen when the change is not dispensed as a screen obtained by replacing the text message M11 and the image IM1 with another text message and image according to the fact where the change is not dispensed.

In Act 50, the CPU 12a operates the printer 12h so as to issue a receipt on which the content of a business transaction of this time is printed on the receipt paper according to the receipt information generated in Act 47. In this manner, the computer is controlled by the CPU 12a based on the control program to function as a printing control unit that controls the printer 12h to print a receipt. The function as the printing unit is implemented by the cooperation of the CPU 12a and the printer 12h.

Thereafter, the CPU 12a returns from Act 50 to Act 31 in FIG. 7, for example, in response to the occurrence of a defined event in which the duration in a state of setting the screen on the touch panel 12g as the first end screen exceeds a predetermined time, and repeats the subsequent processes in a manner similar to that described above.

Meanwhile, when the receipt flag is set (YES in Act 48), the CPU 12a proceeds to Act 51.

In Act 51, the CPU 12a sets the screen on the touch panel 12g as a second end screen. The second end screen notifies the operator that a receipt sheet is not issued.

FIG. 12 is a diagram illustrating an example second end screen SC6. In addition, in FIG. 12, since the same reference numerals are given to the same elements as those in FIG. 10, a detailed description thereof will be omitted.

The second end screen SC6 includes a text message M21, an image IM11, a region R11, and a button B11. The image IM11 represents the state in which the receipt sheet is not issued. The second end screen SC6 is an example of a case where a change is dispensed. The CPU 12a sets the second end screen when the change is not dispensed as a screen obtained by replacing the text message M21 and the image IM11 with another text message and image according to the fact where the change is not dispensed. The CPU 12a returns from Act 51 to Act 31 in FIG. 7, for example, in response to the occurrence of a defined event in which the duration in a state of setting the screen on the touch panel 12g as the second end screen exceeds a predetermined time, and repeats the subsequent processes in a manner similar to that described above.

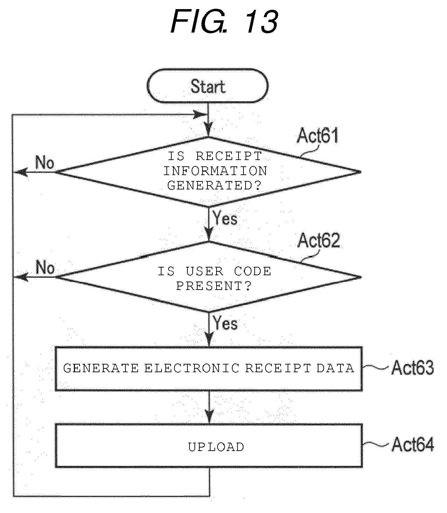

Incidentally, the CPU 12a executes the control process illustrated in FIG. 13, in parallel with the control process illustrated in FIG. 7 and FIG. 8 as described above. The control process illustrated in FIG. 13 achieves the function as a so-called electronic receipt agent.

In Act 61, the CPU 12a checks whether or not the receipt information is generated in Act 47 of FIG. 8. When the receipt information is not generated (NO in Act 61), the CPU 12a repeats Act 61. Thus, in Act 61, the CPU 12a waits for the generation of the receipt information. When Yes is determined because the receipt information is generated, the CPU 12a proceeds to Act 62.

In Act 62, the CPU 12a checks whether or not the user code is included in the generated receipt information. When the user code is not included in the generated receipt information (NO in Act 62), the CPU 12a returns to the standby state of Act 61. In other words, in Act 61 and Act 62, the CPU 12a waits for the generation of the receipt information including the user code. If the receipt information including the user code is generated (YES in Act 62), the CPU 12a proceeds to Act 63.

In Act 63, the CPU 12a generates electronic receipt data, based on the receipt information that is generated in Act 47 and stored in the RAM 12c or the auxiliary storage unit 12d. Specifically, the CPU 12a processes the information that is included in the receipt information, for example, into a structured format such as an extensible markup language (XML) format or a comma-separated values (CSV) format, and generates electronic receipt data by adding other information as necessary. The format in which the electronic receipt data is generated depends on the specification of the electronic receipt service. The CPU 12a stores the generated electronic receipt data in the RAM 12c or the auxiliary storage unit 12d.

In Act 64, the CPU 12a uploads the electronic receipt data that is generated as described above to the receipt server 30. Specifically, the CPU 12a causes the communication unit 12j to transfer the electronic receipt data stored in the RAM 12c or the auxiliary storage unit 12d, to the receipt server 30, by using a predetermined communication protocol. Thus, the communication unit 12j is an example of a communication device. Further, the computer is controlled by the CPU 12a based on the control program to function as a transmission control unit. The function as the transmission unit is implemented by the cooperation of the CPU 12a and the communication unit 12j.

After uploading of the electronic receipt data is completed, the CPU 12a returns to the standby state of Act 61, and prepares for the generation of next receipt information.

Thus, according to the check-out system 10, when the user code cannot be acquired at the time of the purchase registration in the merchandise registration device 11, the payment device 12 attempts to acquire the user code when waiting for the designation of a payment method. When any one of the merchandise registration device 11 and the payment device 12 acquires the user code, the payment device 12 does not issue the receipt using a receipt sheet, and uploads the electronic receipt data to the receipt server 30. Therefore, even when the shopper 22 forgets to notify the salesperson 21 of a preference for the electronic receipt at the time of purchase registration, the shopper 22 can use the electronic receipt service, by reading the bar code representing the user code with the scanner 12f of the payment device 12. In other words, the application of the electronic receipt is designated even in the payment device 12.

If the user code cannot be acquired at the time of merchandise registration, the payment device 12 displays a text message to guide the shopper to scan a bar code representing the user code over the scanner 12f in order to use the electronic receipt service. Therefore, according to the payment device 12, it is possible to inform the shopper 22 that the transaction to be paid is not set to use an electronic receipt service. Further, it is possible to inform the shopper 22 that a bar code representing the user code can be scanned over the scanner 12f in order to use the electronic receipt service. Thus, it is possible to reasonably guide the shopper 22 who is inexperienced in the operation of the payment device 12 to perform a proper operation.

In addition, in the payment device 12, the above text message is included in the select screen for selecting a payment method. Therefore, it is not necessary to prepare a new screen for displaying the above text message, and the number of screen transitions does not increase.

This embodiment can be modified in many ways as follows.

The user code may also be individually provided to the payment device 12 from the merchandise registration device 11, without being included in the payment information.

The acquisition of the user code in the merchandise registration device 11 and the payment device 12 may be input, for example, in response to the operation in the first touch panel 11g, the second touch panel 11h, or the touch panel 12g.

Receipt information of a non-structured format may be uploaded from the payment device 12 to the receipt server 30. Then, the receipt server 30 may generate electronic receipt data by performing format conversion to a structured format.

The receipt information or the electronic receipt data, and the user code may be separately uploaded from the payment device 12 to the receipt server 30.

The control process for the payment process illustrated in FIGS. 7 and 8, and the control process for uploading electronic receipt data illustrated in FIG. 13 may be respectively performed in one control process. In this case, the user code may not be included in the payment information.

A guide operation for guiding the shopper 22 to scan a bar code representing the user code over the scanner 12f in order to use the electronic receipt service may be performed at a different timing than that of receiving selection of a payment method. For example, the CPU 12a sets the screen of the touch panel 12g as a screen for the guide operation, prior to setting the first select screen. The CPU 12a proceeds to Act 37 in FIG. 7, in response to the acquisition of the user code, or the execution of an operation of designating that the electronic receipt service is not to be used, for example, in the touch panel 12g.

The guide operation may be performed, for example, according to a method other than visual display of a text message such as playing of a voice message.

The merchandise is not limited to articles, and may be a service. Thus, the "purchase merchandise" may also refer to a service that is provided from a provider to a receiver.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope and framework of the inventions.

## Claims

1. A payment device for use in a check-out system comprising:
a storage unit;
a communication interface; and
a processor, wherein the processor is configured to control the storage unit and communication interface to:
receive, from a registration device in the check-out system, payment information for a transaction,
receive, from the registration device, a user code corresponding to a user who uses an electronic receipt service,
perform a payment process based on the payment information sent by the registration device and input from a customer,
acquire the user code,
generate receipt information including the merchandise purchased in the transaction and information regarding the payment process,
if the user code is not received from the registration device or not acquired by the payment device, print a receipt sheet based on the receipt information, and
if the user code is received from the registration device or acquired by the payment device, transmit the user code and the receipt information to a management device which stores the receipt information in association with the user code.

2. The payment device according to claim 1, further comprising a display unit configured to display a screen that instructs the user to input the user code.

3. The payment device according to claim 2, wherein the display unit is configured to not display the screen that instructs the user to input the user code when the user code has been received from the registration device or acquired by the payment device.

4. The payment device according to claim 2 or 3, wherein the display unit is configured to display a screen that informs the user that the receipt sheet will not be printed when the user code has been received from the registration device or acquired by the payment device.

5. The payment device according to any one of 2 to 4, wherein the screen is displayed while a registration process of acquiring one or more merchandise codes is ongoing.

6. The payment device according to any one of 1 to 5, wherein the receipt sheet is not printed if the user code is received from the registration device or acquired by the payment device.

7. The payment device according to any one of 1 to 6, further comprising a display unit configured to display a screen that instructs the user to contact an electronic receipt service in communication with the management device to obtain details regarding the transaction.

8. A check-out system comprising:
a registration device; and
one or a plurality of payment device(s) according to any one of claims 1 to 7 in communication with the registration device, wherein
the registration device is configured to:
acquire a merchandise code corresponding to merchandise to be purchased in a transaction,
generate a list of each merchandise to be purchased in the transaction and payment information including a payment amount required for the transaction,
acquire a user code corresponding to a user of an electronic receipt service,
send the payment information to the payment device, and
if the user code is acquired, send the user code to the payment device.

9. A non-transitory computer readable medium containing instructions for a payment device in a system including the payment device and a registration device in communication with each other, the instructions causing the payment device to perform the following functions:
receive, from the registration device in the check-out system, payment information for a transaction;
receive, from the registration device, a user code corresponding to a user who uses an electronic receipt service;
perform a payment process based on the payment information sent by the registration device and input from a customer;
acquire the user code via user input through the payment device;
generate receipt information including the merchandise purchased in the transaction and information regarding the payment process;
if the user code is not received from the registration device or not acquired by the payment device, print a receipt sheet based on the receipt information; and
if the user code is received from the registration device or acquired by the payment device, transmit the user code and the receipt information to a management device which stores the receipt information in association with the user code.

10. The non-transitory computer readable medium according to claim 9, wherein the instructions further cause a display unit of the payment device to display a screen that instructs the user to input the user code.

11. The non-transitory computer readable medium according to claim 10, wherein the instructions further cause the display unit to not display the screen that instructs the user to input the user code when the user code has been received from the registration device or acquired by the payment device.

12. The non-transitory computer readable medium according to claim 10 or 11, wherein the instructions further cause the display unit to display a screen that informs the user that the receipt sheet will not be printed when the user code has been received from the registration device or acquired by the payment device.

13. The non-transitory computer readable medium according to any one of 10 to 12, wherein the instructions further cause the screen to be displayed while a registration process of acquiring one or more merchandise codes is ongoing.

14. The non-transitory computer readable medium according to any one of 9 to 13, wherein the instructions further cause a display unit of the payment device to display a screen that instructs the user to contact an electronic receipt service in communication with the management device to obtain details regarding the transaction.

15. A check-out method using a check-up system including the payment device and a registration device in communication with each other, the method comprising the steps of:
receiving, from the registration device in the check-out system, payment information for a transaction;
receiving, from the registration device, a user code corresponding to a user who uses an electronic receipt service;
performing a payment process based on the payment information sent by the registration device and input from a customer;
acquiring the user code via user input through the payment device;
generating receipt information including the merchandise purchased in the transaction and information regarding the payment process;
if the user code is not received from the registration device or not acquired by the payment device, print a receipt sheet based on the receipt information; and
if the user code is received from the registration device or acquired by the payment device, transmit the user code and the receipt information to a management device which stores the receipt information in association with the user code.
